# EUROPÄISCHE PATENTSCHRIFT

(11) **EP 2 916 450 B1**
(45) Veröffentlichungstag und Bekanntmachung des Hinweises auf die Patenterteilung: **28.06.2017**
(21) Anmeldenummer: 14157509.2
(22) Anmeldetag: 03.03.2014
(51) Int. Cl.: H02N 2/02, F16C 33/30, F16C 29/04

(54) **Antriebsvorrichtung und Verfahren für die Erzeugung einer geführten, linearen oder rotatorischen Bewegung**
Drive device and method for the production of a guided, linear or rotational movement
Dispositif d'entraînement et procédé pour la génération d'un mouvement guidé, linéaire ou rotatif

(43) Veröffentlichungstag der Anmeldung: 09.09.2015
(73) Patentinhaber: Picofine GmbH, 26135 Oldenburg (DE)
(72) Erfinder: Raß, Christoph, 26123 Oldenburg (DE); Kortschack, Axel, 26121 Oldenburg (DE)
(74) Vertreter: Eisenführ Speiser

(56) Entgegenhaltungen:
- EP-B1- 2 096 325
- DE-C- 959 604
- DE-T2- 69 302 084
- DE-U- 7 507 730

## Beschreibung

Die Erfindung betrifft eine nicht-resonante lineare oder rotatorische Positioniervorrichtung und ein entsprechendes Positionierverfahren.

Es ist bekannt, Trägheitsantriebe (z.B. Piezo-Slip-Stick-Antriebe) mit elektrischen Signalen zu versorgen, um ein zu positionierendes Objekt mit einer hohen Bewegungsauflösung zu bewegen.

Beispielhafte Ausführungen sind z.B. aus "Dynamic piezoelectric translation devices" von D.W. Pohl (Review of Scientific Instruments, vol. 58 (1), Januar 1987, Seiten 54 bis 57) und WO 98/19347 A2 bekannt.

Ebenfalls ist es bekannt, ein Objekt durch den Einsatz mehrerer Aktoren mit einer hohen Bewegungsauflösung zu positionieren, wobei hier die mehreren Aktoren in einer geeigneten Weise zusammenarbeiten, um gemeinsam ein zu positionierendes Objekt zu bewegen. Beispiele hierzu finden sich in EP 0 750 356 A1, WO 93/19494 A1, DE 10 2009 013 849 A1 und DE 10 2012 101 688 A1.

Bei beiden Klassen von Antrieben handelt es sich um nicht-resonante Antriebe, bei denen es periodisch zu sehr hohen Beschleunigungen einzelner Komponenten kommen kann. Im Gegensatz zu Ultraschallantrieben werden bei diesen Antrieben keine Eigenschwingungen ausgenutzt, um über einen oder mehrere Reibflächen ein Objekt voranzutreiben, sondern die Bewegungen der Aktoren werden über Reibflächen auf ein zu positionierendes Objekt übertragen, welches ununterbrochen im Reibkontakt mit den Reibflächen steht. Bei dem zu bewegenden Objekt kann es sich beispielsweise um einen beweglichen Schlitten einer Führung handeln. Es kann sich aber auch um einen Läufer handeln, der mit dem beweglichen Schlitten einer Führung verbunden ist oder wird.

Es hat sich gezeigt, dass die Kombination von Trägheitsantrieben und Mehraktorantrieben mit Führungen zu besonders leistungsfähigen Mikro- und Nanopositionieren führen. In der Regel handelt es sich dabei um Führungen mit Wälzkörpern, deren Wälzkörper in Käfigen lagern. Typische Wälzkörper sind z.B. Kugeln, Walzen und Nadeln.

Besonders interessant ist der Einsatz von Kurzhubführungen. Das sind Führungen, bei denen die Wälzkörper bei der Relativbewegung des Schlittens gegenüber der Schiene permanent im Eingriff sind. Das führt zu besonders störfreien Bewegungen, da keine Wälzkörper periodisch in Eingriff geraten, bzw. aus dem Eingriff geraten, wie es z.B. bei Kugelumlaufführungen der Fall ist.

Für den Einsatz in Mikro- und Nanopositionierern sind bei Kurzhubführungen die im Käfig lagernden Wälzkörper zwischen der stationären Schiene und dem beweglichen Schlitten vorzugsweise spielfrei eingespannt. Man spricht hier auch von einer vorgespannten Führung. Die sich ergebenden Positionierer können sehr hohe Lasten tragen und externe Kräfte werden durch die Führungen gut von den empfindlichen Aktoren, in der Regel Piezoaktoren, ferngehalten. Die Lebensdauer der Antriebe an sich beträgt bei Antrieben z.B. der SLC-Serie der Firma SmarAct GmbH bereits mehrere 100 km.

Lebensdauerbeschränkend wirken beim Einsatz der integrierten vorgespannten Wälzführungen die bisher zum Einsatz kommenden Führungen.

Mit laufender Betriebsdauer wandern die Wälzkörper mit ihren Käfigen gegenüber der Schiene und dem Schlitten. Dieses Wandern verkürzt den nutzbaren Hub der Führungen immer weiter, da die Wälzkörper, bzw. die Käfige so immer weiter an einen oder mehrere der Endanschläge der Führung, bzw. das Ende der Führung wandern. Der Antrieb kann diese gewanderten Wälzkörper bei einer vorgespannten Führung nicht einfach wieder zurecht schieben, z.B. indem der Antrieb die Wälzkörper haltenden Käfige gegen harte Endanschläge fährt, da die Gleitreibungskräfte der Wälzkörper in der vorgespannten Führung in Summe deutlich größer sind als die Gleitreibungskraft des Antriebs. Die Summe der Gleitreibungskräfte der Wälzkörper in der vorgespannten Führung entspricht ungefähr der Kraft, die aufzubringen ist, um die Käfige, die die Wälzkörper halten, in einer vorgespannten Führung bei zueinander fixierter beweglicher und stationärer Komponenten der Führung zum Durchrutschen zu bringen. Da die Gleitreibungskraft des Antriebs die Obergrenze für die Kraft des Antriebs darstellt, reicht die Kraft des Antriebs zum Verschieben nicht aus.

Stoßen also die Wälzkörper bzw. die Käfige, die die Wälzkörper zueinander in Distanz halten, an einen der Endanschläge, bzw. an das harte Ende der Führung (also z.B. interne Endanschläge), so sind bei sinnvoll vorgespannten Führungen die Trägheitsantriebe und Mehraktorantriebe nicht in der Lage, diese Wälzkörper zurück zu schieben. Eine Verringerung der Gleitreibungskräfte der Wälzkörper selbst ist durch den Abbau der Vorspannung möglich, womit auf die Vorteile der vorgespannten Führung verzichtet werden müsste.

Da die Antriebe bei sinnvoll vorgespannten Führungen nicht in der Lage sind, die Wälzkörper von diesen harten Endanschlägen in die Sollposition zurückzuschieben, geht der Fachmann davon aus, dass die bekannten Techniken, die ein Wandern der Wälzkörper und Käfige über eine zurückstellende Kraft verhindern (im Folgenden Anti-Schlupf-Vorrichtung genannt), bei vorgespannten Führungen nicht in Kombination mit Trägheitsantrieben und Mehraktorantrieben verwendet werden können, da die zurückstellende Kraft der Anti-Schlupf-Vorrichtung die Bewegung der Antriebe genauso wie die Endanschläge blockieren wird.

Wenn die Kraft des Antriebs nicht ausreicht, die Wälzkörper auf der Führungsoberfläche zu verschieben, da diese in den Laufflächen zu sehr verspannt sind, geht der Fachmann davon aus, dass der Antrieb die Wälzkörper auch bei dem Einsatz einer Anti-Schlupf-Vorrichtung nicht verschieben kann, da die Anti-Schlupf-Vorrichtung keinen Einfluss auf die Kraft des Antriebs hat.

Die Kraft, die von der Anti-Schlupf-Vorrichtung benötigt wird, um das Wandern der Wälzkörper in den Käfigen zu verhindern bzw. wieder zurückzustellen, entspricht im Wesentlichen der Kraft, die auch bei einem Zurechtschieben der Käfige an harten Endanschlägen (siehe oben) aufgebracht werden muss, schließlich muss die Anti-Schlupf-Vorrichtung die Wälzkörper verschieben, während keine bekannte Maßnahme zur Reduktion der Gleitreibungskräfte der Wälzkörper, z.B. durch den Abbau der Vorspannung, vorgenommen wird.

Da Trägheitsantriebe und Mehraktorantriebe mit ihren eher geringen Kräften nicht in der Lage sind, Käfige bzw. die in den Käfigen gehaltenen Wälzkörper in einer vorgespannten Führung zielgerichtet zu verschieben, ist für den Fachmann davon auszugehen, dass auch der Einsatz von Anti-Schlupf-Vorrichtungen bei vorgespannten Führungen für die Trägheitsantriebe und Mehraktorantriebe scheitern wird, da die Anti-Schlupf-Vorrichtung, die den Käfig in Sollposition bringen soll, aufgrund der dann wirkenden Kräfte die Antriebsvorrichtung ebenfalls blockieren wird.

Insofern wird der Fachmann die Kombination von Trägheits- bzw. Mehraktorantrieben mit Führungen, die eine Anti-Schlupf-Vorrichtung aufweisen, wenn überhaupt nur für nicht vorgespannte Führungen in Betracht ziehen, da bei nicht vorgespannten Führungen die Wälzkörper vom Antrieb entlang der Lauffläche der Führung verschoben werden können. Aufgrund der geringen Anpresskraft der Wälzkörper auf den Laufflächen ergibt sich bei nicht vorgespannten Führungen eine entsprechend geringe Gleitreibungskraft, die vom Antrieb überwunden werden kann, solange die Führung nicht zu große Lasten zu tragen hat.

Da nicht vorgespannte Führungen ein mechanisches Spiel aufweisen, ist der praktische Nutzen der sich ergebenen Antriebsvorrichtung, besonders für Mikro- und Nanopositionieraufgaben begrenzt.

Typische Techniken zum Verhindern des makroskopischen Wanderns der Wälzkörper über Anti-Schlupf-Vorrichtungen sind beispielsweise in folgenden Schriften beschrieben:
In dem Gebrauchsmuster DE 75 07 730 U1 wird eine Vorrichtung beschrieben, bei der das Wandern der Wälzkörper auf makroskopischer Skala verhindert wird, indem ein im Käfig gelagertes Zahnrad in eine in die Führung eingearbeitete Zahnreihe eingreift. Die Zahnreihe ist sowohl im stationären, als auch in der beweglichen Komponente eingearbeitet, so dass das in beiden Zahnreihen eingreifende Zahnrad bei der Relativbewegung zwischen Schlitten zur Schiene zwangsgeführt wird. Dabei bewegen sich das Zahnrad und damit auch der dieses Zahnrad lagernde Käfig stets nur um die Hälfte der Strecke, um die der Schlitten relativ zur Schiene bewegt wird. Es handelt sich um eine Zwangsführung durch Formschluss.

Darauf basierende Ausprägungen sind beispielsweise in EP 1 319 852 B1, DE 19 815 525 A1, EP 1 23 6912 A2, EP 2 096 325 B1 und EP 1 972 806 A2 beschrieben. Darüber hinaus gibt es noch sehr viele weitere Varianten von Anti-Schlupf-Vorrichtungen.

Eine interessante Abwandlung ist z.B. in JP 2007-198604 A beschrieben. Hier sind die Strukturen, in die das im Käfig gehaltene Zahnrad-ähnliche Element eingreift, in die Lauffläche eingebracht. Im Prinzip handelt es sich wieder um eine über eine Art Verzahnung hergestellte Zwangsführung, die entsprechend rückstellende Kräfte über den Käfig auf die Wälzkörper ausübt und somit die Wälzkörper in der Solllage hält bzw. in diese bringt.

In dem hier angeführten Stand der Technik wird - wie dies angesichts der obigen Diskussion zum Verhältnis von Anti-Schlupf-Vorrichtungen und für ein Rückstellen zu schwachen Antrieben auch nicht anders zu erwarten ist - keine Kombination einer solchen Anti-Schlupf-Vorrichtung mit einem Trägheitsantrieb oder einem Mehraktorantrieb beschrieben.

Somit sind erwartungsgemäß keine Trägheitsantriebe und Mehraktorantriebe mit einer Vorrichtung bekannt, die die Käfige mit den Wälzkörpern und die dazugehörigen Wälzkörper in die Sollposition bringt oder hält.

Wie schon oben ausgeführt, besteht der dem Fachmann zur Verfügung stehende Ansatz darin, die Führungen so einzustellen, dass diese gerade nicht vorgespannt sind, so dass die Käfige mit einer geringen Kraft verschoben werden können, mit der Folge, dass auch die Trägheits- und/oder Mehraktorantriebe in der Lage sind, die die Wälzkörper haltenden Käfige zu verschieben. Damit kann zwar erreicht werden, dass die Käfige aufgrund der integrierten Anti-Schlupf-Vorrichtung nicht mehr wanderten, derartige Antriebsvorrichtungen sind aber für anspruchsvolle Mikro- und Nanopositionieraufgaben nicht sinnvoll zu nutzen, da aufgrund der fehlenden Vorspannung die Positionervorrichtungen ein mechanische Spiel aufweisen.

Eine der vorliegenden Erfindung zugrundeliegende Aufgabe ist es, eine eingangs genannte nicht-resonante lineare oder rotatorische Positioniervorrichtung und ein entsprechendes Positionierverfahren vorzustellen, bei denen hohe Lasten getragen werden können und die Aktoren gegenüber externen Kräften geschützt sind und zugleich eine hohe Positioniergenauigkeit erreicht wird, also die Vorteile einer vorgespannten Führung bestehen, wobei die bei bekannten Positioniervorrichtungen mit vorgespannter Führung auftretenden Beschränkungen der Lebensdauer durch Wandern von Wälzkörpern und Käfigen nicht oder zumindest vermindert bestehen.

Mit der Erfndung wird eine nicht-resonante lineare oder rotatorische Positioniervorrichtung mit mindestens einem Trägheits- oder Mehraktorantrieb, mindestens einer vorgespannten Wälzführung und mindestens einer direkt oder indirekt wirkenden Anti-Schlupf-Vorrichtung für Wälzkörper der Wälzführung vorgeschlagen, wobei der Antrieb eine Gleitreibungskraft aufweist, die geringer ist als die Summe der Gleitreibungskräfte der Wälzkörper in der Wälzführung.

Mit der Erfindung wird ein Verfahren zur nicht-resonante linearen oder rotatorischen Positionierung mit mindestens einem Trägheits- oder Mehraktorantrieb, mindestens einer Wälzführung und mindestens einer direkt oder indirekt wirkenden Anti-Schlupf-Vorrichtung für Wälzkörper der Wälzführung vorgeschlagen, wobei die Wälzführung mit einer Vorspannung versehen wird, die so groß ist, dass die Summe der Gleitreibungskräfte der Wälzkörper in der Wälzführung größer ist als eine Gleitreibungskraft des Antriebs.

Die Erfindung erreicht, dass auf die Wälzkörper, bzw. die Käfige einer vorgespannten Führung eine rückstellende Kraft hin zur von der Auslenkung der Führung abhängigen Sollposition wirkt, so dass ein makroskopisches Wandern der Wälzkörper unterbunden wird, ohne dabei den Trägheitsantrieb, bzw. den Mehraktorantrieb zu blockieren.

Unter "Auslenkung der Führung" wird die Strecke der relativen Verschiebung der stationären Komponente der Führung zur beweglichen Komponente der Führung verstanden.

Um mit einer Trägheitsantriebsvorrichtung, bzw. einer Mehraktorantriebsvorrichtung mit integrierter Führung gute Ergebnisse bei Mikro- oder Nanopositionieraufgaben zu erzielen, ist es unbedingt notwendig, dass die Führung vorgespannt ist, so dass also die Wälzkörper zwischen den Laufflächen der Führung geklemmt sind und spielfrei auf diesen Laufflächen abrollen können.

Es wurde gefunden, dass vorgespannte Führungen bei Trägheitsantrieben und Mehraktorantrieben aufgrund der extrem hohen antriebsbedingten Beschleunigungen stärker belastet werden, als es bei üblichen Antrieben der Fall ist. Die beweglichen Komponenten der Führungen erfahren hohe Beschleunigungen, die auch deutlich oberhalb 100 g, zum Teil sogar deutlich oberhalb von 1000 g liegen können. Die Beschleunigung wirkt nicht nur auf den angetriebenen Teil der Führung, sondern auch auf die zwischen dem beweglichen Teil (im Folgenden Schlitten genannt) und dem stationären Teil (im Folgenden Schiene genannt) laufenden Wälzkörper und die diese in Distanz haltenden Käfige. Aufgrund der hohen Beschleunigung wirkt auf die Wälzkörper eine der Bewegung entgegenwirkende Trägheitskraft. Dieses kann während der Beschleunigung zu stets minimalen Verschiebungen der Wälzkörper gegenüber der idealen abrollenden Bewegung der Wälzkörper gegenüber dem Schlitten und der Schiene führen. Da bei Trägheitsantrieben und Mehraktorantriebsvorrichtungen diese Beschleunigungen mit häufiger Wiederholung anliegen (durchaus im Bereich oberhalb 50 kHz über mehrere Tage), kommt es auch in einer häufigen Wiederholung zu der oben beschriebenen Verschiebung. In der Folge wandern die Wälzkörper mit ihren Käfigen gegenüber der Schiene und dem Schlitten. Neben den für die Trägheitsantrieben und Mehraktorantrieben typischen hohen Beschleunigungen können auch weitere Faktoren, wie z.B. geometrische Fehler in den üblicherweise geschliffenen Führungen dazu führen, dass die Wälzkörper nicht sauber abrollen, sondern wandern.

Im Rahmen dieser Erfindung hat sich überraschend und entgegen der Erwartung gezeigt, dass, selbst wenn die Trägheits- und/oder Mehraktorantriebe deutlich schwächer sind als die Kraft, die notwendig ist, um die Käfige zu verschieben, der Einsatz einer Anti-Schlupf-Vorrichtung, welche die Käfige und Wälzkörper über eine Kraft zurück in die von der Auslenkung der Führung abhängige Sollposition drängt, zu einem gut funktionierenden Positionierer führt, der in der Lage ist, den beweglichen Läufer über sehr lange Zeiträume hinweg zu bewegen, bei der unter normalen Umständen ein die Bewegung des Antrieb blockierendes Wandern des Käfigs mit den Wälzkörpern zu erwarten gewesen wäre. Das ist der Fall, obwohl die Kräfte des Antriebs (entspricht der Gleitreibungskraft des Abtriebs) viel geringer sind als die Kräfte, die notwendig sind, um die Käfige bzw. die zugehörigen Wälzkörper aufgrund der Vorspannung der Führung bei fixierter Lage des Schlittens gegenüber der Schiene in eine Sollposition zu verschieben (entspricht der Summe der Gleitreibungskräfte der Wälzkörper in der vorgespannten Führung).

Dieses unerwartete Verhalten mag sich durch die hohen, antriebsbedingten Beschleunigungen erklären, die in erster Linie dazu führen, dass es zum Wandern der Wälzkörper kommt, dann aber im Betrieb ein leichteres Verschieben erlauben, so dass der Antrieb hier der Funktion der Anti-Schlupf-Vorrichtung unterstützend Hilfestellung leistet.

Das führt zu einem unerwartet breiten Einsatzfeld der Antriebe. Den bisher hauptsächlich in Laboranwendungen anzutreffenden Trägheitsantrieben und Mehraktorantrieben erschließen sich aufgrund der nun sehr viel größeren möglichen kumulierten Strecken auch industrielle Anwendungen mit deutlich intensiverem Betrieb.

Es können verschiedene Anti-Schlupf-Vorrichtungen in Antriebsvorrichtungen mit integrierten, vorgespannten Führungen vorgesehen werden. Hierbei kann prinzipiell auf alle bekannten Mechanismen der in Zusammenhang mit Führung eingesetzten Anti-Schlupf-Vorrichtungen zurückgegriffen werden. Darüber hinaus können auch weitere, bisher nicht bekannte Mechanismen genutzt werden, von denen einige Ausführungen beispielhaft erklärt werden.

Es werden hierfür mehrere Ansätze zur Realisierung der Vorrichtung beschrieben, die sich u.a. darin unterscheiden, in welcher Weise die Anti-Schlupf-Vorrichtung ausgeführt wird.

Der Erfindung liegt die folgende Erkenntnis zu Grunde:
Erfindungsgemäß kann die mindestens eine Anti-Schlupf-Vorrichtung die Käfige bzw. die in den Käfigen gehaltenen Wälzkörper mit einer Kraft in eine von der Auslenkung der Führung abhängigen Sollposition treiben bzw. halten, die geringer als die Antriebskraft der Trägheits- oder Mehraktorantriebe (entspricht der Gleitreibungskraft des Antriebs) ist, obwohl die notwendige Kraft zum Verschieben der Käfige bzw. der Wälzkörper in der vorgespannten Führung bei ansonsten zueinander fixierten Führungskomponenten (also die Summe der Gleitreibungskräfte der Wälzkörper in der vorgespannten Führung) deutlich größer ist als die Antriebskraft der Antriebe. Das heißt, dass die Rückstellung der Wälzkörper mit einer Kraft realisiert wird, die eigentlich geringer ist als die Kraft, die notwendig ist, diese zum Durchrutschen zu bringen. Dieses unerwartete Verhalten lässt sich vermutlich durch die von den Trägheitsantrieben, bzw. Mehraktorantrieben aufgebrachte hohen Beschleunigungen erklären. Aufgrund der hohen Beschleunigungen neigen die Käfige mit den Wälzkörpern einerseits zum Wandern, andererseits ist es somit auch möglich diese im Betrieb unter Einsatz einer geringen Kraft in die Sollposition zu bringen. Somit unterstützen die Antriebe im Betrieb die Funktion der Anti-Schlupf-Vorrichtung.

Durch den Einsatz der Vorrichtung kann der Hub einer Kurzhubführung über lange kumulierte Strecken aufrechterhalten werden, ohne dass ein Serviceintervall für die Rückstellung der Wälzkörper oder Käfige vorgesehen werden muss.

In einer ersten Ausführungform wird in dem Käfig neben den die lagernde Wirkung aufbringenden Wälzkörpern mindestens eine weitere abwälzende Struktur gehalten, die einen deutlich höheren Reibkoeffizienten zur Führung aufweist als die lagernden Wälzkörper. Dieser mindestens eine weitere Wälzkörper soll im Folgenden "Reibrad" genannt werden. Dieses Reibrad muss keine tragende Funktion übernehmen, obgleich eine tragende Funktion für das Reibrad nicht ausgeschlossen ist. Ohne die Beschränkungen, die mit einer tragenden Funktion verbunden sind, ist der Fachmann in der Wahl freier als bei der Wahl des Materials der Wälzkörper der Führung. Wichtig ist, dass das Reibrad einen hohen Reibkoeffizienten zur Führung aufweist, so dass ein Durchrutschen der stationären Komponente (Schiene) und beweglichen Komponente (Schlitten) relativ zum Reibrad verhindert und eine abrollende Bewegung der lagernden Wälzkörper erzeugt wird. Da der Käfig das Reibrad hält, kann der Käfig, der auch die anderen Wälzkörper hält, nicht unkontrolliert wandern, solange das Reibrad in der von der Auslenkung der Führung abhängigen Sollposition bleibt.

Vorzugsweise hat das Reibrad einen etwas größeren Radius als die lagernden Wälzlager. Ebenfalls vorteilhaft ist das Reibrad deutlich weicher als die Wälzkörper, so dass das Reibrad, welches zwischen dem Schlitten und der Schiene verspannt ist, sich leicht verformt, so dass ein guter Flächenkontakt aufgebaut wird. Um einen hohen Reibkontakt zu erzielen, kann beispielsweise ein metallisches Reibrad beschichtet werdend. Es ist aber auch möglich, das Reibrad aus Kunststoffen oder anderen Materialien zu fertigen.

Es ist besonders vorteilhaft, wenn das Reibrad elastisch ist, da dann die auftretenden hohen Beschleunigungen zum Teil durch die Elastizität des Reibrads abgefangen werden können, ähnlich der Wirkung eines Stoßfängers.

In weiteren Ausführungsformen wird in der Trägheitsantriebs-, bzw. die Mehraktorantriebsvorrichtung die Anti-Schlupf-Wirkung über einen Formschluss, bzw. über eine Zwangsführung erzielt, welche den Käfig bzw. einen oder die Wälzkörper in eine von der Auslenkung der Führung abhängige (relative) Sollposition bringt bzw. dort hält.

Bei vielen aus anderem Zusammenhang bekannten Zwangsführungen wird ein die Wälzkörper haltender Käfig z.B. durch einen Eingriff eines Zahnrades zwangsgeführt und somit sind auch die Wälzkörper zwangsgeführt, da diese in dem Käfig gelagert sind und somit zwangsweise mit dem Käfig mitbewegt werden.

In einer solchen Ausführungsform können beispielsweise aus dem Stand der Technik bekannte Anti-Schlupf-Vorrichtungen verwendet werden, bei denen ein in dem Käfig befindliches Zahnrad, bzw. eine Zahnrad-ähnliche Struktur sowohl in die stationäre Komponente als auch in den beweglichen Komponente der Führung eingreift. Dieses führt dazu, dass der Käfig über das im Käfig gelagerte Zahnrad mit vorzugsweise der Hälfte der Strecke bewegt wird, um die der Schlitten relativ zur Scheine verschoben wird.

Es gibt Zahnräder, die nur entfernt wie ein klassisches Zahnrad aussehen. Daher wurde der Begriff "Zahnrad-ähnliche Struktur" verwendet, um zu verdeutlichen, dass nicht nur die klassische Form einen Zahnrades umfasst ist. Der Begriff "Zahnrad" an sich umfasst schon alle Varianten, die die Funktion eines Zahnrades übernehmen, bei der am Umfang verteilte Aus- und Einbuchtungen (mit beliebiger Form und Ausprägung) mit einer weiteren Struktur mit zum Zahnrad passenden Aus- und Einbuchtungen in Eingriff gehen können, so dass Bewegungen formschlüssig übertragen werden können. In diesem Zusammenhang sind bei der Verwendung der Begriffe "Zahnrad" bzw. "Zahnstange" auch jeweils Zahnrad-ähnliche Strukturen bzw. Zahnstangen-ähnliche Strukturen umfasst.

In einer neuartigen Ausführung, die ebenfalls auf den Formschluss beruht, kann die Anti-Schlupf-Vorrichtung der Antriebsvorrichtung auch in einer noch nicht bekannten Weise realisiert werden. So ist es möglich, dass mindestens ein Zahnrad in der stationären Komponente der Führung gelagert ist. Dieses Zahnrad kann nun sowohl in Zahnstangen eingreifen, die im Käfig eingearbeitet oder angebracht sind, als auch in Zahnstangen die in oder an der beweglichen Komponente der Führung vorhanden sind. Der Käfig, bzw. die mit dem Käfig direkt oder indirekt verbundene Zahnstange muss auf einem kleineren Radius mit dem Zahnrad in Eingriff befindlich sein als die Zahnstange der bewegliche Komponente. Vorzugsweise in einem Eingriffsverhältnis, so dass der Käfig bei einer Relativverschiebung der beweglichen Komponente zur stationären Komponente um die Hälfte dieser Verschiebung mitbewegt wird.

Selbstverständlich kann das mindestens eine Zahnrad genauso-gut in der beweglichen Komponente der Führung gelagert sein, dann muss aber in der stationären Komponente der Führung eine Zahnstange eingearbeitet oder angebracht sein, in die dieses Zahnrad eingreifen kann.

Besonders vorteilhaft ist es, wenn die Strukturen, in die die Zahnräder eingreifen sollen, nachträglich eingebracht werden. So z.B. durch das Einsetzen und Befestigen von passenden Zahnstangen. Die nachträgliche Einbringung ermöglicht z.B. eine einfache Verwendung von Anti-Schlupf-Vorrichtungen auch bei Antriebsvorrichtungen, bei denen die integrierte Führung aus schwer bearbeitbaren Materialien, wie z.B. Keramiken besteht.

In einer weiteren, neuartigen Ausführungsform wird die Anti-Schlupf-Vorrichtung nicht durch einen geometrisch bestimmten Formschluss wie z.B. zwischen Zahnrädern und Zahnrädern mit Zahnstangen erzeugt, sondern durch eine geometrisch unbestimmte Verzahnung, in Form aufeinander abgestimmter Oberflächenrauigkeit. Das hat z.B. den Vorteil, dass keine Verzahnung herzustellen ist, sondern nur eine zueinander passende Oberflächenrauigkeit zu erzeugen ist, was sehr einfach sein kann, z.B. wenn mit Verfahren wie z.B. Erodieren gearbeitet wird, bei denen der Bearbeitungsprozess bereits zu einer einstellbaren Oberflächenrauigkeit führt.

Selbstverständlich kann eine Ausführungsform auch aus der Kombination mehrerer hier beschriebener Ausführungsformen erstellt werden.

Der Einsatz ist nicht auf eine lineare Bewegung von Trägheits-, bzw. Mehraktohrantriebsvorrichtungen beschränkt. So bietet sich der Einsatz z.B. bei Goniometern an, die über Trägheitsantriebe bzw. Mehraktorantriebe angetrieben werden. Sogar bei rotatorischen Trägheits- bzw. Mehraktorantriebsvorrichtungen ist der Einsatz vorteilhaft, da hier eine hohe Wiederholgenauigkeit der rotatorischen Positionierer ermöglicht wird, wenn die Wälzkörper an stets definierter Stelle sitzen.

In einer Ausführungsform der erfindungsgemäßen Antriebsvorrichtung ist die Antriebsvorrichtung als Trägheitsantrieb ausgestaltet. In einer weiteren Ausführungsform der erfindungsgemäßen Antriebsvorrichtung ist der Vortriebsaktor als Mehraktorantrieb ausgestaltet.

Bevorzugte und vorteilhafte Ausführungsformen der Erfindung sind insbesondere in den abhängigen Ansprüchen definiert, wobei zu verstehen ist, dass eine Ausführungsform, die im Zusammenhang mit einem erfindungsgemäßen Verfahren beschrieben ist ebenso als Ausführungsform einer erfindungsgemäßen Vorrichtung zu verstehen ist, was auch umgekehrt gilt.

Im Folgenden wird die Erfindung anhand bevorzugter Ausführungsbeispiele unter Bezug auf die beiliegenden Figuren näher erläutert. Hierbei zeigt
- Fig. 1: eine Prinzipskizze eines beispielhaften linearen Trägheitsantriebs oder Mehraktorantriebs mit linearer Kurzhub-Führung,
- Fig. 2: eine Prinzipskizze eines bekannten linearen Trägheitsantriebs oder Mehraktorantriebs mit Schnitt durch einen Teil der integrierten linearen Kreuzrollen-Führung,
- Fig.3: eine Prinzipskizze eines bekannten linearen Trägheitsantriebs oder Mehraktorantriebs mit Schnitt durch einen Teil der integrierten linearen Kugel-Führung,
- Fig. 4a: eine schematische Darstellung eines ersten Ausführungsbeispiels mit AntiSchlupf-Vorrichtung über ein Reibrad in horizontaler Lage,
- Fig. 4b: eine weitere schematische Darstellung eines ersten Ausführungsbeispiels mit Anti-Schlupf-Vorrichtung über ein Reibrad in der Lage wie die Wälzkörper,
- Fig. 5a: eine schematische Darstellung eines zweiten Ausführungsbeispiels mit AntiSchlupf-Vorrichtung über eine Zwangsführung des Käfigs über einen Formschluss, wie z.B. einem Zahnrad, dass in Zahnstangen-Strukturen eingreift, die in dem stationären und beweglichen Teil der Führung eingearbeitet sind,
- Fig. 5b: eine weitere schematische Darstellung eines zweiten Ausführungsbeispiels mit Anti-Schlupf-Vorrichtung über eine Zwangsführung des Käfigs über einen Formschluss, wobei in dieser Darstellung der Eingriff der Zahnrad-Struktur so eine Ausrichtung hat, dass diese Struktur in Vertiefungen eingreift, die in die Laufflächen der beweglichen und stationären Führungskomponenten eingearbeitet sind,
- Fig. 6: eine schematische Darstellung eines dritten Ausführungsbeispiels mit Anti-Schlupf-Vorrichtung über eine Zwangsführung des Käfigs mittels Flächen deren Oberflächenrauigkeit bzw. geometrisch unbestimmte Verzahnungen ineinander greifen, wobei die aufeinander abgestimmten Flächen sowohl auf mindestens eine abrollende Struktur die im Käfig gelagert ist aufgebracht sind als auch auf der beweglichen und stationären Führungskomponenten,
- Fig. 7a: eine schematische Darstellung eines vierten Ausführungsbeispiels mit einer neuartigen Anti-Schlupf-Vorrichtung über eine Zwangsführung des Käfigs, der die Wälzkörper hält, wobei das Zahnrad, bzw. die Zahnradähnliche Struktur in der stationären oder beweglichen Komponente der Führung gelagert ist,
- Fig. 7b: die beispielhafte Ausführung der Zahnradähnlichen Struktur aus der Fig. 7a in Drauf- und Seitenansicht.

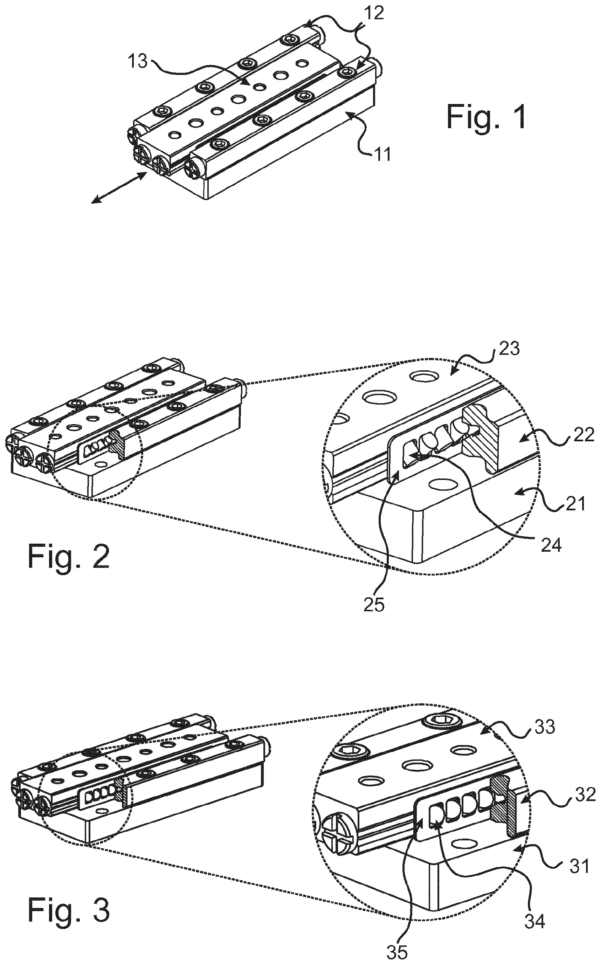

Fig. 1 zeigt eine Prinzipskizze eines Trägheitsantriebs bzw. Mehraktorantriebs mit integrierter Kurzhub-Führung. Die Bewegungsrichtung ist durch den Doppelpfeil visualisiert. Die Antriebe und das Antriebsprinzip sind der Übersichtlichkeit halber (wie auch bei den weiteren Ausführungsbeispielen) nicht dargestellt. Üblicherweise sind die hier nicht gezeigten Aktoren des bzw. der Antriebe in einer Bodenplatte 11 eingebracht. Die Komponenten 12 sind die Schienen der Führung und die Komponente 13 der Schlitten des Positionierers. Bei der integrierten Führung (12 und 13) kann es sich beispielsweise um eine Kreuzrollenführung, eine Nadelführung oder auch eine Kugelführung handeln. Es sei darauf hingewiesen, dass es viele verschiedene Bauformen von Führungen gibt, die anstatt der hier dargestellten Führungen als Baugruppe gewählt und integriert werden können.

Es sei an dieser Stelle auch darauf hingewiesen, dass die Festlegung, dass die Bodenplatte 11 mit den Schienen 12 als stationär angesehen wird, willkürlich ist. Wenn der Schlitten 13 als stationär betrachtet wird und die übrigen Komponenten als beweglich, so handelt es sich selbstverständlich um einen äquivalenten Aufbau. Ebenso können gegenüber eine entsprechenden Referenzpunkt sowohl die Bodenplatte 11 mit den Schienen 12 einerseits als auch andererseits der Schlitten 13 beweglich sein.

Aufgrund der Beschleunigungen der Antriebe und aufgrund geometrischer Fehler in den Führungen wandern die Wälzkörper auf den Laufflächen der Führung anstatt sauber abzurollen, so dass dadurch der Hub der Führungen bei intensiver Nutzung des Antriebs stark reduziert werden kann, bis hin zu einem Grad, bei dem der Antrieb ohne einen Serviceeinsatz technisch nicht mehr nutzbar ist. Das Problem war bisher kaum präsent, da die Trägheitsantriebe bzw. Mehraktorantriebe mit integrierter Kurzhub-Führung vorrangig in Laboranwendungen eingesetzt wurden, bei denen keine großen kumulierten Strecken aufkommen. Jedoch mit neuerdings sehr leistungsfähigen Trägheits- bzw. Mehraktorantrieben, sind industrielle Einsätze der Antriebe möglich, bei denen eine großer Vefahrstrecke auch über viele Millionen von Zyklen über den gesamten Hub der integrierten Führung gewährleistet sein muss.

Fig. 2 zeigt eine schematische Illustration eines Trägheitsantriebs bzw. eines Mehraktorantriebs mit typischen Kurzhubführungen in der Ausprägung "Kreuzrollenführung". Dargestellt sind eine Bodenplatte 21, stationäre Schienen 22 und ein relativ zu den Schienen beweglicher Schlitten 23. Die Lagerung erfolgt hier durch kreuzweise angeordnete Rollen 24, deren Abstand zueinander über einen Käfig 25 bestimmt wird. Statt der Rollen können selbstverständlich auch Kugeln und Nadeln eingesetzt werden. Dem Fachmann ist klar, dass auch andere bekannte Arten von Kurzhubführungen möglich sind.

Fig. 3 zeigt eine schematische Illustration eines Trägheitsantriebs bzw. eines Mehraktorantriebs mit typischen Kurzhubführungen in der Ausprägung "Kugelführung". Dargestellt sind wieder eine Bodenplatte 31, stationären Schienen 32 und ein relativ zu den Schienen bewegliche Schlitten 33. Die Lagerung erfolgt in diesem Beispiel durch in Reihe angeordnete Kugeln 34, deren Abstand zueinander über einen Käfig 35 bestimmt wird.

Die mit den Fig. 1 bis 3 illustrierten grundsätzlichen Konstruktionen von Bodenplatte, stationären Schienen, Schlitten und zwischen Schienen und Schlitten angeordnetem Käfig mit Wälzkörpern bestehen - soweit nicht anders ersichtlich bzw. beschrieben - auch für die im Folgenden diskutierten Ausführungsbeispiele, für die dann auf die obigen Erläuterungen verwiesen sei.

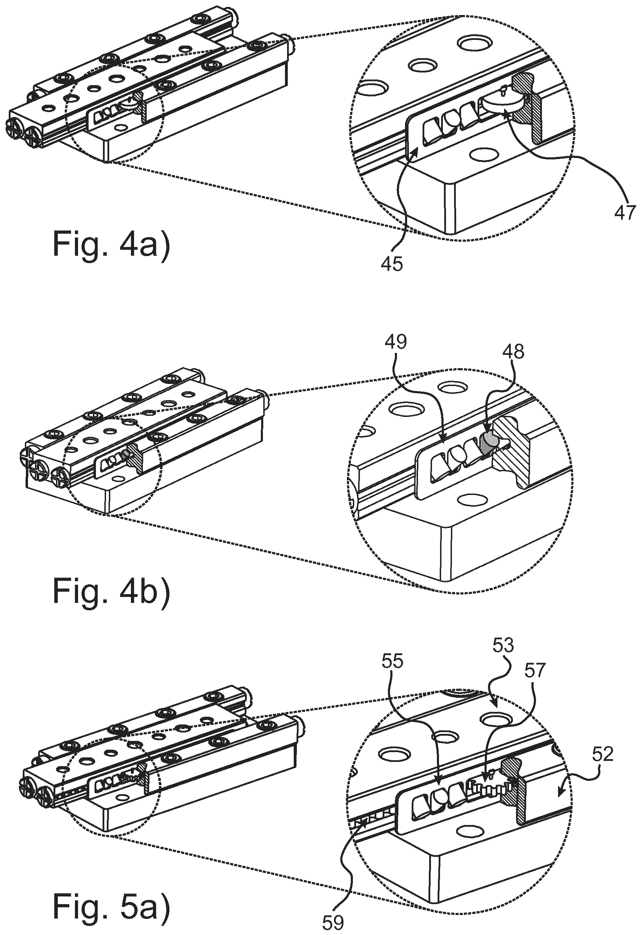

Fig. 4a) zeigt ein erstes Ausführungsbeispiel in Form einer schematischen Illustration eines Trägheitsantriebs bzw. Mehraktorantriebs mit integrierter Kurzhubführung, bei der ein Reibrad, bzw. eine Reibrolle die Funktion einer Anti-Schlupfvorrichtung übernimmt.

Auf der linken Seite ist eine schematische Abbildung zu sehen, bei der ein Schnitt durch eine der Führungsschienen dargestellt ist. In diesem Bereich ist auch die Anti-Schlupf-Vorrichtung zu erkennen. Dieser Bereich ist auf der rechten Seite vergrößert dargestellt. Ein hier beispielhaft horizontal in einem Käfig 45 angeordnete Reibrad 47 steht in Reibkontakt mit den stationären und beweglichen Komponenten der Führung. Da das Reibrad einen besonders guten Reibkontakt zu den Führungsteilen aufweist, hemmt das Rad ein Durchrutschen der in dem Käfig gehalten Wälzkörper gegenüber der Führungsflächen. Vorzugsweise ist das Reibrad aus einem Material, welches gegenüber der Führung einen hohen Reibkoeffizienten aufbringt. Da das Reibrad keine tragende Funktion hat, ist der Fachmann bei der Wahl der Materialien entsprechend frei.

Fig. 4b) zeigt eine zweite Variante des ersten Ausführungsbeispiels in Form einer schematischen Illustration eines Trägheitsantriebs bzw. Mehraktorantriebs mit integrierter Kurzhubführung, bei der ein Reibrad oder eine Reibrolle 48 die Funktion einer Anti-Schlupf-Vorrichtung übernimmt. Auf der linken Seite ist eine schematische Abbildung zu sehen, bei der ein Schnitt durch eine der Führungsschienen dargestellt ist. In diesem Bereich ist auch die Anti-Schlupf-Vorrichtung zu erkennen. Dieser Bereich ist auf der rechten Seite vergrößert dargestellt. Bei der hier dunkel dargestellten Rolle handelt es sich um ein Reibrad 48. Dieses Reibrad 48 steht in Reibkontakt zu der stationären und beweglichen Komponente der Führung. Da das Reibrad einen besonders guten Reibkontakt zu den Führungsteilen aufweist, hemmt das Rad ein Durchrutschen der in dem Käfig 49 gehalten Wälzkörper gegenüber der Führungsflächen. Das Reibrad 48 aus der zweiten Variante des ersten Ausführungsbeispiels gemäß Fig. 4b) reibt, anders als bei der ersten Variante des ersten Ausführungsbeispiels gemäß Fig. 4a), direkt auf den Laufflächen der Führung. Selbstverständlich sind auch Reibräder denkbar, bei denen beliebige Flächen der Führungen als Reibpartner für das Reibrad verwendet werden können.

Fig. 5a) und 5b) zeigen bevorzugte Varianten eines zweiten Ausführungsbeispiels mit integrierter Anti-Schlupf-Vorrichtung, deren Wirkung über einen Formschluss erzeugt wird.

Fig. 5a) zeigt eine schematische Illustration einer ersten Variante des zweiten Ausführungsbeispiels eines Trägheitsantriebs bzw. Mehraktorantriebs mit integrierter vorgespannter Führung, bei der die Funktion einer Anti-Schlupf-Vorrichtung über einen Formschluss erzeugt wird, der zu einer Zwangsführung des Käfigs und somit auch der Wälzkörper führt.

Auf der linken Seite ist eine schematische Abbildung zu sehen, bei der ein Schnitt durch eine der Führungsschienen dargestellt ist. In diesem Bereich ist die Anti-Schlupf-Vorrichtung zu erkennen. Der Bereich ist auf der rechten Seite vergrößert dargestellt. Ein hier beispielhaft horizontal angeordnetes Zahnrad 57 steht in Eingriff mit zwei in beiden Seiten der Führung (d.h. jeweils im Schlitten und in der Schiene) eingearbeiteten Zahnstangen. In der Fig. 5a) ist die in den Schlitten 53 eingearbeitete Zahnstange 59 visualisiert. Die in der Schiene 52 vorhandene Zahnstange ist nicht visualisiert. Da das Zahnrad 57 sich in Bewegungsrichtung der Führung nicht makroskopisch relativ zum Käfig 55 bewegen kann, wird der Käfig 55 somit über das Zahnrad 57 zwangsgeführt, und somit mit etwa der Hälfte der Strecke bewegt, mit der die Führungsteile 53 und 52 relativ zueinander entlang der Bewegungsrichtung verschoben werden. Die in dem Käfig 57 gehaltenen Wälzkörper werden somit makroskopisch in die von der Auslenkung der Führung abhängige Sollposition gebracht. Selbstverständlich kann das mindestens eine Zahnrad 57 auch vertikal angeordnet werden. Wichtig ist nur, dass es in Zahnstangen eingreift, von denen mindestens eine mit der bewegliche Komponente und mindestens eine weitere mit der stationären Komponente der Führung verbunden ist. Dabei ist es, wie auch in allen anderen Ausführungsbeispielen irrelevant, ob es sich um eine direkte oder indirekte Verbindung handelt. Es ist auch unwichtig, ob die Zahnstangen-Struktur in die Führung eingearbeitet ist, oder ab die Struktur ein- bzw. aufgebracht wird.

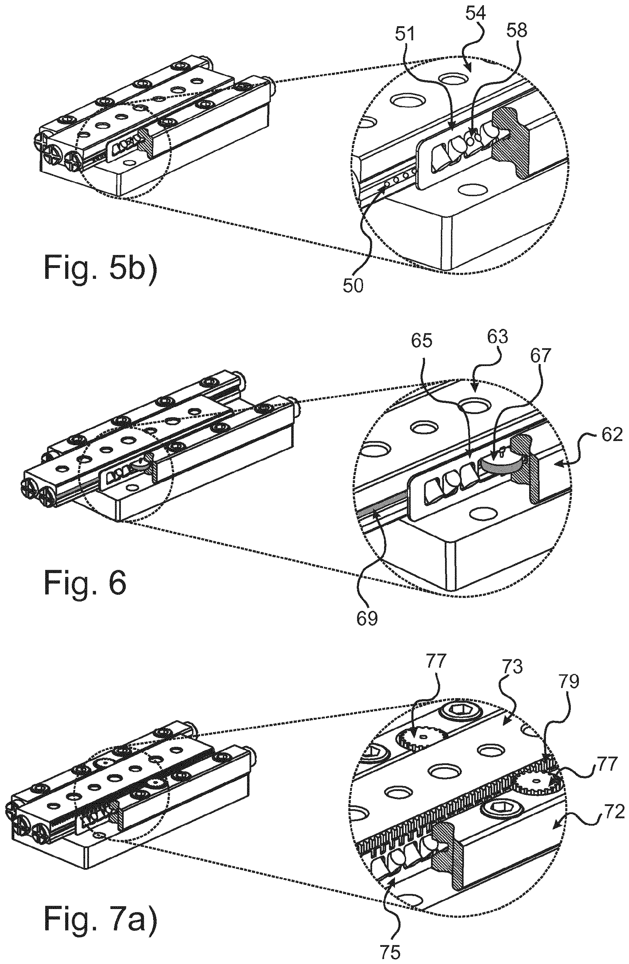

Fig. 5b) zeigt eine zweite Variante des zweiten Ausführungsbeispiels in Form einer schematischen Illustration eines Trägheitsantriebs bzw. Mehraktorantriebs mit integrierter vorgespannter Führung, bei der die Funktion einer Anti-Schlupf-Vorrichtung ebenfalls über einen Formschluss erzeugt wird. In diesem Fall ist mindestens eine der Rollen so ausgeführt, dass diese in die Lauffläche der Führung eingreifen kann, so dass ein Durchrutschen dieser Rolle 58 gegenüber der Lauffläche unterbunden und eine abrollende Bewegung erzwungen wird. Diese Rolle 58 muss nicht zwangsläufig eine tragende Funktion übernehmen, so wie die anderen Wälzkörper. Da die Rolle 58 mit den in die Führungsfläche 50 eingreifenden Strukturen eine Zwangskopplung mit der Führung in Bewegungsrichtung aufweist, hemmt die Rolle 58 ein Durchrutschen der in dem Käfig gehalten Wälzkörper gegenüber den Führungsflächen. Da sich die Rolle 58 mit den in die Führungsfläche eingreifenden Strukturen in Bewegungsrichtung der Führung nicht makroskopisch relativ zum Käfig 51 bewegen kann, wird der Käfig 51 somit zwangsgeführt um etwa. der Hälfte der Strecke bewegt, mit der die Führungsteile relativ zueinander entlang der Bewegungsrichtung verschoben werden. Die in dem Käfig 51 gehaltenen Wälzkörper werden somit makroskopisch in der veränderlichen Sollposition gehalten.

Fig. 6 zeigt eine erste Ausprägung eines dritten Ausführungsbeispiel in Form einer schematischen Illustration eines Trägheitsantriebs bzw. Mehraktorantriebs mit integrierter vorgespannter Führung, bei der über die Oberflächenstruktur, bzw. Oberflächenrauigkeit der aneinander abrollenden Oberflächen die Funktion einer Anti-Schlupfvorrichtung übernommen wird. Die Oberflächenrauhigkeit ist so aufeinander abgestimmt, dass diese Flächen in Form einer geometrisch unbestimmten Mikroverzahnung ineinandergreifen, so dass ein Durchrutschen relativ zueinander unterbunden wird.

Auf der linken Seite der Fig. 6 ist eine schematische Abbildung zu sehen, bei der ein Schnitt durch eine der Führungsschienen dargestellt ist. In diesem Bereich ist die Anti-Schlupf-Vorrichtung zu erkennen. Dieser Bereich ist auf der rechten Seite vergrößert dargestellt. Das hier beispielhaft horizontal angeordnete Rad 67 hat die oben angesprochene Oberflächenrauigkeit im dunkel eingefärbten Bereich (d.h. auf seiner Umfangsfläche). Diese Oberflächenrauigkeit ist passend zur Oberflächenrauigkeit im inneren und äußeren Bereich der Führung 62 und 63, mit dem das Rad 67 in Berührung bzw. Eingriff steht. Im inneren Bereich, der in der Abbildung sichtbar ist, ist der entsprechende Bereich an der Führung ebenfalls dunkel eingefärbt dargestellt und mit der Kennzeichnung 69 versehen. Da das Rad 67 aufgrund der geometrisch unbestimmten, im Eingriff befindlichen Mikroverzahnung nicht durchrutschen kann, und weil das Rad 67 im Käfig 65 gehalten wird, hemmt das Rad 67 entsprechend ein Durchrutschen der in dem Käfig 65 gehalten Wälzkörper gegenüber der Führungsflächen.

Bei einer zweiten Variante des dritten Ausführungsbeispiel wird die Funktion einer Anti-Schlupfvorrichtung ebenfalls durch die Oberflächenrauhigkeit von ineinandergreifenden Flächen realisiert. Anders als im in der Fig. 6 gezeigten Beispiel wird hier ein Teil der Mantelfläche der mindestens einen Rolle (siehe Fig. 4b) mit einer zur Führung passenden Oberflächenrauigkeit eingestellt, so dass diese Flächen ineinandergreifen können. Die Wirkungsweise ist in beiden Fällen identisch.

Fig. 7a) zeigt eine schematische Illustration eines vierten Ausführungsbeispiels eines Trägheitsantriebs bzw. Mehraktorantriebs mit integrierter vorgespannter Führung, bei der die Funktion einer Anti-Schlupfvorrichtung über einen neuartigen Formschluss erzeugt wird, der zu einer Zwangsführung des Käfigs 75 im Verhältnis zur Auslenkung der Führung führt.

Auf der linken Seite ist eine schematische Abbildung zu sehen, bei der ein Schnitt durch eine der Führungsschienen dargestellt ist. Es ist ein Bereich umkreist, der auf der rechten Seite vergrößert dargestellt ist. In diesem Bereich ist die Anti-Schlupf-Vorrichtung zu erkennen. Die Anti-Schlupf-Vorrichtung umfasst ein Zahnrad 77. Das hier dargestellte Zahnrad 77 ist in einer Schiene 72 der Führung drehbar gelagert. Das Zahnrad 77 hat in diesem Beispiel zwei Ebenen mit unterschiedlichen Durchmessern, so dass sich im Eingriff in die Führungskomponente und in den Käfig unterschiedliche Umfänge ergeben. Mit dem kleineren Durchmesser greift das Zahnrad 77 in die dargestellten Aussparungen im Käfig 75. Mit dem größeren Durchmesser greift das Zahnrad in die in den Schlitten 73 eingearbeitete Zahnstange 79. Die Radien für die Eingriffe sind so gewählt, dass der Käfig 75 mit der halben Strecke bewegt wird, um die die bewegliche Komponente 73 und die stationäre Komponente 72 der Führung relativ zueinander verschoben werden.

Da das Zahnrad 77 aufgrund der Verzahnung den Käfig 75 zwangsführt und weil die Wälzkörper im Käfig 75 gelagert sind, können die Wälzkörper nicht makroskopisch auf den Laufflächen der Führung durchrutschen.

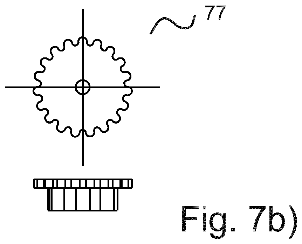

Fig. 7b) zeigt das Zahnrad 77 aus Fig. 7a) in Drauf- und Seitenansicht. Die Darstellung ist nicht maßstabsgetreu und soll nur eine Ausführungsform zeigen, bei der sich unterschiedliche Radien ergeben, die den Käfig je um die halbe Strecke vorantreiben um die die bewegliche Komponente gegenüber der stationären Komponente der Führung relativ verschoben wird. Der Bereich mit dem kleineren Radius greift in diesem Beispiel in die Aussparungen im Käfig ein, während der Radius mit dem größeren Radius in die Aussparungen der beweglichen Komponente der Führung eingreift.

Neben dieser Anordnung sind auch andere Formen des Zahnrads möglich. So bietet es sich zum Beispiel an, dass das Zahnrad nur eine Ebene hat, wobei dieses Zahnrad mit dem Käfig auf einem inneren Radius im Eingriff befindlich ist und mit der in der Führung befindlichen Zahnstangen-Struktur auf einem weiter außen liegenden Radius im Eingriff befindlich ist. Diese Eingriffsverhältnis führt dann ebenfalls zu der erwünschten Zwangsführung, so dass der Käfig bei einer Verschiebung der beweglichen und stationären Komponenten der Führung relativ zueinander um vorzugsweise die Hälfte dieser Strecke bewegt wird.

Für die Funktion ist es irrelevant, wie das Zahnrad konkret ausgeführt ist. So lassen sich z.B. Varianten erstellen, bei denen es sich bei dem Zahnrad um ein Stirnzahnrad handelt, genauso gut lassen sich aber auch Varianten realisieren, bei denen es sich bei dem Zahnrad um ein Kronzahnrad handelt. Ebenfalls ist es denkbar, dass statt einem einteiligen Zahnrad zwei Zahnräder mit unterschiedlichen Radien genutzt werden, die miteinander direkt oder indirekt verbunden werden.

Selbstverständlich kann das Prinzip der Anti-Schlupf-Vorrichtung des vierten Ausführungsbeispiels in vielfachen Ausprägungen realisiert werden. So kann das Zahnrad 77 ebenso gut in der beweglichen Komponente 73 integriert werden, wobei dann die Zahnstangen-ähnliche Struktur auf Seite der stationären Komponente der Führung liegen muss. Ebenso ist auch die Lage des Zahnrades irrelevant für die Funktion. Ein vertikaler Einsatz ist ebenso möglich wie der dargestellte horizontale Einbau. Wichtig ist nur, dass das Zahnrad so ausgelegt wird, dass der Käfig stets um die vorzugsweise halbe Strecke vorgetrieben wird, mit der Schlitten und Schiene relativ zueinander bewegt wurden.

Auch wenn die oben diskutierten Ausführungsbeispiele sich jeweils auf eine lineare Bewegung beziehen ist die Erfindung nicht auf eine solche lineare Bewegung beschränkt und eine rotatorische Bewegung, insbesondere auch die eines Goniometers, sowie zusammengesetzte Bewegungen und Positionierungen sind ebenfalls möglich.

Vorzugsweise ist die relativ zum stationären Teil beweglich angeordnete Komponente über ein oder mehrere Walzkörperführungen beweglich gelagert.

Es ist möglich, dass die Anti-Schlupf-Vorrichtungen als integraler Bestandteil der Führung ausgeführt werden oder alternativ als externe Vorrichtung, was den Vorteil mit sich bringt, dass eine Anti-Schlupf-Vorrichtung auch nachgerüstet werden kann.

Es ist für die Vorrichtung äquivalent, ob der bewegliche Teil der Führung mit einem vom Antrieb bewegten Läufer verbunden wird oder ob der bewegliche Teil der Führung den Läufer des Antriebs darstellt.

Vorzugsweise sind alle Käfige der Vorrichtungen mit entsprechenden Anti-Schlupf-Vorrichtungen zu versehen, so dass keiner der Käfige den Bewegungsumfang der Vorrichtung hemmen kann.

Es ist möglich, dass mehr als nur eine Führung in die Positioniervorrichtung integriert wird. In diesen Fall sollten vorzugsweise alle Käfige über eine Anti-Schlupf-Vorrichtung verfügen.

Besonders interessant ist der Einsatz von Anti-Schlupf-Vorrichtungen in Poistioniervorrichtungen mit keramischen Führungen. Keramische Führungen haben, vermutlich aufgrund der der geringen Elastizität der Materialien, eine besonders große Neigung zum Wandern der Wälzkörper auf den Führungsflächen, so dass der Bedarf für eine Schlupfvermeidung groß ist. Da keramische Führungen nicht-magnetisch sind und es möglich ist, auch die Trägheits- bzw. die Mehraktorantriebsvorrichtung aus nichtmagentischen Materialien zu fertigen, ist die Kombination einer Antriebsvorrichtung mit integrierter vorgespannter keramischer Führung und einer Anti-Schlupf-Vorrichtung von besonders großem Interesse. In vielen Fällen werden Antriebsvorrichtungen mit keramischen Führungen in einer Vakuumkammer eingesetzt. Wenn es in der Vakuumkammer zum Wandern der Wälzkörper kommt, dann ist das besonders störend, da die Positioniervorrichtung in der Vakuumkammer nicht einfach erreichbar ist, ohne das Vakuum zu brechen. Insbesondere bei Ultrahoch-Vakuum-Anwendungen ist eine solche Unterbrechung nicht akzeptabel, da jeweils im Bereich mehrerer Tage bis Wochen gepumpt werden muss, bis ein nutzbares Vakuum erreicht wird.

Unabhängig vom Material der integrierten Führung bietet sich der Einsatz der erfindungsgemäßen Vorrichtungen für Vakuum und insbesondere für Ultrahoch-Vakuumanwendungen und Tieftemperatur-Anwendungen an, denn häufig wird die Positioniervorrichtung während des Vakuumziehens erhitzt (ausgebacken). Dabei kann es zu thermischen Ausdehnungen in den Materialien kommen. In ungünstigen Fällen baut sich dabei, während die Positioniervorrichtung erhitzt ist, die Vorspannung der Führung aufgrund der thermischen Ausdehnung ab. Das kann dann, insbesondere wenn die Positioniervorrichtung nicht horizontal angeordnet ist, dazu führen, dass die Käfige mit den Wälzkörpern durchrutschen, so dass nach dem Ausbacken, wenn also die Vorspannung wieder vorhanden ist, die Führung einen deutlich geringen Hub erlaubt als vor dem Ausbacken. Wird hingegen eine erfindungsgemäße Vorrichtung mit Anti-Schlupf-Vorrichtung verwendet, so wird ein Durchrutschen der Käfige unterbunden. Bei Tieftemperatur-Anwendungen kommt noch hinzu, dass die auftretenden Temperaturdifferenzen und somit die möglichen Verformungen aufgrund der thermischen Ausdehnung besonderes groß ausfallen. Darüber hinaus erhöhen sich bei Vakuum-Anwendungen die Reibkoeffizienten der in Kontakt stehenden Materialien häufig ganz massiv. Somit hat die erfindungsgemäße Vorrichtung einen besonders hohen Einsatzwert, denn diese ermöglicht ihre Käfige in veränderlicher Sollposition zu halten, ohne dass dabei der Antrieb blockiert wird, auch wenn die Summe der Gleitreibungskräfte der Wälzkörper in der vorgespannten Führung viel größer ist als die Antriebskraft.

Es ist von Vorteil, wenn die Antriebsvorrichtung über einen Positionssensor verfügt, da somit auch anspruchsvolle Positioneraufgaben und Automatisierungslösungen realisiert werden können.

Die vorliegende Erfindung wurde insbesondere in den Ausführungsbeispielen in der Weise beschrieben, dass die Bodenplatte ortsfest ist, während das zu bewegende Objekt (bisher als Schlitten bezeichnet) relativ zur Bodenplatte und damit auch absolut bewegt wird. Es muss jedoch verstanden werden, dass die Bewegung zwischen Bodenplatte und Schlitten primär als die Relativbewegung zwischen diesen Elementen zu verstehen ist. Es ist ebenfalls möglich, dass die Bewegung zwischen Schlitten und Bodenplatte sich als eine absolute Bewegung der Bodenplatte äußert, wobei dann der Schlitten absolut gesehen ortsfest bleiben würde. Ebenso ist es möglich, dass die Relativbewegung zu einer jeweiligen Absolutbewegung von sowohl Bodenplatte als auch Schlitten (in jeweils entgegengesetzter Richtung) führt.

## Patentansprüche

1. Nicht-resonante lineare oder rotatorische Mikro- oder Nanopositioniervorrichtung mit mindestens einem Trägheits- oder Mehraktorantrieb, mindestens einer vorgespannten Wälzführung (12, 13, 22, 23, 32, 33, 52, 53, 62, 63, 72, 73) und mindestens einer direkt oder indirekt wirkenden Anti-Schlupf-Vorrichtung (47, 48, 57, 58, 67, 77) für Wälzkörper (24, 34) der Wälzführung, wobei der Antrieb eine Gleitreibungskraft aufweist, die geringer ist als die Summe der Gleitreibungskräfte der Wälzkörper (24, 34) in der Wälzführung.

2. Positioniervorrichtung nach Anspruch 1,
wobei die Anti-Schlupf-Vorrichtung (57, 58, 67, 77) eine Zwangsführung der Wälzkörper (24, 34) beinhaltet.

3. Positioniervorrichtung nach einem der vorstehenden Ansprüche,
wobei die mindestens eine Anti-Schlupf-Vorrichtung mindestens einen Käfig (55) der Wälzführung, der die Wälzkörper in Position hält, über ein Zwangsführungsmittel (57) in eine veränderliche Sollposition bringt bzw. hält,
wobei die Zwangsführung durch einen Formschluss zwischen mindestens einem im Käfig (55) gelagerten Zahnrad (57) und mit dem Zahnrad (57) im Eingriff befindlichen Zahnstangen-Strukturen (59) realisiert wird,
wobei die Zahnstangen-Strukturen (59) in die Führung (52, 53) eingearbeitet oder an den Führungen direkt oder indirekt befestigt sind, und
wobei mindestens eine Zahnstangen-Struktur relativ zum stationären Teil der Führung (52) unbeweglich ist und mindestens eine Zahnstangen-Struktur (59) relativ zum beweglichen Teil der Führung (53) unbeweglich ist.

4. Positioniervorrichtung nach Anspruch 1 oder 2,
wobei eine der beweglichen und der stationären Komponente (72, 73) der Führung eine mechanische Übersetzung mit einem oder mehreren Zahnrädern (77) aufweist,
wobei die andere der beweglichen und der stationären Komponente eine Zahnstangenstruktur (79) aufweist, die in die Komponente eingearbeitet oder daran angebracht ist,
wobei ein Käfig (75) der Wälzführung, der die Wälzkörper in Position hält, Aussparungen aufweist,
wobei die bewegliche Komponente (73) der Führung, die stationäre Komponente (72) der Führung und der Käfig (75) über die mechanische Übersetzung, die in die Zahnstangenstruktur (79) eingreift und in die Aussparungen eingreift, so gekoppelt sind, dass eine relative Bewegung zwischen der beweglichen Komponente (73) und der stationären Komponente (72) mit einer in einem vorbestimmten Verhältnis, vorzugsweise einem hälftigen Verhältnis, zu der relativen Bewegung stehenden Bewegung des Käfigs (75) einhergeht,
wobei die mechanische Übersetzung vorzugsweise einen Zahnkranz (77) mit umlaufenden zwei Zahnreihen aufweist, wobei die Umfänge der Zahnreihen in dem vorbestimmten Verhältnis zueinander stehen.

5. Positioniervorrichtung nach Anspruch 1 oder 2,
wobei die mindestens eine Anti-Schlupf-Vorrichtung mindestens einen Käfig (75) der Wälzführung, der die Wälzkörper in Position hält, über ein Zwangsführungsmittel (77) in einer veränderliche Sollposition bringt bzw. hält,
wobei die Zwangsführung durch einen Formschluss zwischen mindestens einem Zahnrad erzielt wird, welches drehbar an der beweglichen Komponente (73) der Führung oder der stationären Komponente (72) der Führung gelagert ist und jeweils in Aussparungen im mindestens einen Käfig (75) und in mindestens eine Zahnstangen-Struktur (79) eingreift, die in die stationäre oder bewegliche Komponente der Führung (72, 73) eingearbeitet oder daran angebracht ist,
wobei das mindestens eine Zahnrad (77) vorzugsweise so eingreift, dass der Käfig (75) mit nur der Hälfte der Strecke bewegt wird, um die die bewegliche und stationären Komponenten der Führung relativ zueinander verschoben werden.

6. Positioniervorrichtung nach einem der vorstehenden Ansprüche, wobei es sich bei der Führung um ein Goniometer handelt.

7. Positioniervorrichtung nach einem der vorstehenden Ansprüche, wobei es sich bei dem Material der Führung um eine Keramik handelt.

8. Positioniervorrichtung nach einem der vorstehenden Ansprüche, wobei die Positioniervorrichtung für einen Einsatz im Vakuum ausgestaltet ist.

9. Positioniervorrichtung nach einem der vorstehenden Ansprüche, wobei die Positioniervorrichtung für den Einsatz unter extremen Temperaturen von über +100°C oder unter -100°C bestimmt ist.

10. Verfahren zur nicht-resonanten linearen oder rotatorischen Mikro- oder Nanopositionierung mit mindestens einem Trägheits- oder Mehraktorantrieb, mindestens einer Wälzführung (12, 13, 22, 23, 32, 33, 52, 53, 62, 63, 72, 73) und mindestens einer direkt oder indirekt wirkenden Anti-Schlupf-Vorrichtung (47, 58, 57, 58, 67, 77) für Wälzkörper (24, 34) der Wälzführung, wobei die Wälzführung mit einer Vorspannung versehen wird, die so groß ist, dass die Summe der Gleitreibungskräfte der Wälzkörper (24, 34) in der Wälzführung größer ist als eine Gleitreibungskraft des Antriebs.

## Claims

1. Non-resonant linear or rotatory micro or nano-positioning device comprising at least one inertia or multiple actuator drive, at least one pretensioned roller guide (12, 13, 22, 23, 32, 33, 52, 53, 62, 63, 72, 73) and at least one directly or indirectly operating anti-slip device (47, 48, 57, 58, 67, 77) for rolling elements (24, 34) of the roller guide, wherein the drive has a sliding friction force which is lower than the sum of the sliding friction forces of the rolling elements (24, 34) in the roller guide.

2. Positioning device according to claim 1,
wherein the anti-slip device (57, 58, 67, 77) includes a forced guiding of the rolling elements (24, 34).

3. Positioning device according to any of the preceding claims,
wherein the at least one anti-slip device brings or holds at least one cage (55) of the roller guide, which holds the rolling element in position, by means of forced guiding means (57) in an adjustable intended position,
wherein the forced guiding is achieved by a form-fitting connection between at least one gear (57) mounted in the cage (55) and toothed rack structures (59) in engagement with the gear (57),
wherein the toothed rack structures (59) are worked into the guide (52, 53) or a fixed onto the guides directly or indirectly, and
wherein at least one toothed rack structure cannot move relative to the stationary of the guide (52) and at least one toothed rack structure (59) cannot move relative to the movable part of the guide (53).

4. Positioning device according to claim 1 or 2,
wherein one of the movable and stationary components (72, 73) of the guide has a mechanical transmission with one or more gears (77),
wherein the other of the movable and stationary components has a toothed rack structure (79), which is worked into the components or attached onto the latter,
wherein a cage (75) of the roller guide, which holds the rolling element in position, comprises recesses,
wherein the movable component (73) of the guide, the stationary component (72) of the guide and the cage (75) are coupled via the mechanical transmission which engages in the toothed rack structure and into the recesses, so that a relative movement between the movable component (73) and the stationary component (72) is accompanied by a movement of the cage (75) which is in a prespecified ratio, preferably a half ratio to the relative moment, wherein the mechanical transmission preferably comprises a sprocket (77) with two rotating rows of teeth, wherein the circumferences of the rows of teeth are in a prespecified ratio to one another.

5. Positioning device according to claim 1 or 2,
wherein the at least one anti-slip device brings or holds at least one cage (75) of the roller guide, which holds the rolling elements in position, by means of a forced guiding means (77) into a variable intended position,
wherein the forced guiding is achieved by means of form-fitting between at least one gear, which is mounted rotatably on the movable component (73) of the guide or the stationary component (72) of the guide and engages respectively in recesses in at least one cage (75) and in at least one toothed rack- structure (79), which is worked into the stationary or movable component of the guide (72, 73) or attached to the latter,
wherein the at least one gear (77) preferably engages so that the cage (75) is moved only over half the distance by which the movable and stationary components of the guide are displaced relative to one another.

6. Positioning device according to any of the preceding claims, wherein the guide is a goniometer.

7. Positioning device according to any of the preceding claims, wherein the material of the guide is ceramic.

8. Positioning device according to any of the preceding claims, wherein the positioning device is designed for use in a vacuum.

9. Positioning device according to any of the preceding claims, wherein the positioning device is intended to be used in extreme temperatures of above +100°C or below -100°C.

10. Method for non-resonant linear or rotatory micro or nano-positioning comprising at least one inertia or multiple actuator drive, at least one roller guide (12, 13, 22, 23, 32, 33, 52, 53, 62, 63, 72, 73) and at least one anti-slip device (47, 58, 57, 58, 67, 77) operating directly or indirectly for rolling elements (24, 34) of the roller guide, wherein the roller guide is provided with pretensioning which is so great that the sum of the sliding friction forces of the rolling elements (24, 34) in the roller guide is greater than the sliding friction force of the drives.

## Revendications

1. Dispositif de micro- ou nano-positionnement rotatif ou linéaire non résonnant avec au moins un entraînement à inertie ou à actionneurs multiples, au moins un guidage par roulement précontraint (12, 13, 22, 23, 32, 33, 52, 53, 62, 63, 72, 73) et au moins un dispositif anti-patinage à action directe ou indirecte (47, 48, 57, 58, 67, 77) pour des corps de roulement (24, 34) du guidage par roulement, dans lequel l'entraînement présente une force de frottement de glissement, qui est inférieure à la somme des forces de frottement de glissement des corps de roulement (24, 34) dans le guidage par roulement.

2. Dispositif de positionnement selon la revendication 1,
dans lequel le dispositif anti-patinage (57, 58, 67, 77) comprend un guidage forcé des corps de roulement (24, 34).

3. Dispositif de positionnement selon l'une quelconque des revendications précédentes,
dans lequel l'au moins un dispositif anti-patinage amène ou maintient au moins une cage (55) du guidage par roulement, qui maintient les corps de roulement en position, dans une position de consigne variable par le biais d'un moyen de guidage forcé (57),
dans lequel le guidage forcé est réalisé par une complémentarité de forme entre au moins une roue dentée (57) logée dans la cage (55) et des structures à crémaillère (59) se trouvant en prise avec la roue dentée (57),
dans lequel les structures à crémaillère (59) sont incorporées dans le guidage (52, 53) ou fixées directement ou indirectement aux guidages, et
dans lequel au moins une structure à crémaillère est immobile par rapport à la partie stationnaire du guidage (52) et au moins une structure à crémaillère (59) est immobile par rapport à la partie mobile du guidage (53).

4. Dispositif de positionnement selon la revendication 1 ou 2,
dans lequel un du composant mobile et du composant stationnaire (72, 73) du guidage présente une transmission mécanique avec une ou plusieurs roues dentées (77),
dans lequel l'autre du composant mobile et du composant stationnaire présente une structure à crémaillère (79), qui est incorporée dans le composant ou est montée sur celui-ci,
dans lequel une cage (75) du guidage par roulement, qui maintient les corps de roulement en position, présente des évidements,
dans lequel le composant mobile (73) du guidage, le composant stationnaire (72) du guidage et la cage (75) sont couplés par le biais de la transmission mécanique, qui vient en prise avec la structure à crémaillère (79) et vient en prise avec les évidements, de telle manière qu'un mouvement relatif entre le composant mobile (73) et le composant stationnaire (72) va de pair avec un mouvement de la cage (75) se trouvant dans un rapport prédéfini, de préférence un demi-rapport, par rapport au mouvement relatif,
dans lequel la transmission mécanique présente de préférence une couronne dentée (77) avec deux rangées de dents périphériques, dans lequel les circonférences des rangées de dents se trouvent dans le rapport prédéfini l'une par rapport à l'autre.

5. Dispositif de positionnement selon la revendication 1 ou 2,
dans lequel l'au moins un dispositif anti-patinage amène ou maintient au moins une cage (75) du guidage par roulement, qui maintient les corps de roulement en position, dans une position de consigne variable par le biais d'un moyen de guidage forcé (77),
dans lequel le guidage forcé est obtenu par une complémentarité de forme entre au moins une roue dentée, laquelle est logée de manière rotative au niveau du composant mobile (73) du guidage ou du composant stationnaire (72) du guidage et vient en prise respectivement avec des évidements dans l'au moins une cage (75) et avec au moins une structure à crémaillère (79), qui est incorporée dans le composant stationnaire ou mobile du guidage (72, 73) ou est montée sur celui-ci,
dans lequel l'au moins une roue dentée (77) vient en prise de préférence de telle sorte que la cage (75) n'est déplacée que de la moitié de la distance de laquelle les composants mobile et stationnaire du guidage peuvent être déplacés l'un par rapport à l'autre.

6. Dispositif de positionnement selon l'une quelconque des revendications précédentes, dans lequel le guidage est un goniomètre.

7. Dispositif de positionnement selon l'une quelconque des revendications précédentes, dans lequel le matériau du guidage est une céramique.

8. Dispositif de positionnement selon l'une quelconque des revendications précédentes, dans lequel le dispositif de positionnement est configuré pour une utilisation dans le vide.

9. Dispositif de positionnement selon l'une quelconque des revendications précédentes, dans lequel le dispositif de positionnement est destiné à l'utilisation dans des températures extrêmes de plus de +100 °C ou de moins de -100 °C.

10. Procédé de micro- ou nano-positionnement rotatif ou linéaire non résonnant avec au moins un entraînement à inertie ou à actionneurs multiples, au moins un guidage par roulement (12, 13, 22, 23, 32, 33, 52, 53, 62, 63, 72, 72) et au moins un dispositif anti-patinage à action directe ou indirecte (47, 48, 57, 58, 67, 77) pour des corps de roulement (24, 34) du guidage par roulement, dans lequel le guidage par roulement est doté d'une précontrainte, qui est aussi grande que la somme des forces de frottement de glissement des corps de roulement (24, 34) dans le guidage par roulement est supérieure à une force de frottement de glissement de l'entraînement.
